(19) Europäisches Patentamt / European Patent Office / Office européen des brevets

(11) **EP 4 124 828 B1**

(12) **EUROPEAN PATENT SPECIFICATION**

(45) Date of publication and mention of the grant of the patent:
**29.05.2024 Bulletin 2024/22**

(21) Application number: **21204213.9**

(22) Date of filing: **22.10.2021**

(51) International Patent Classification (IPC):
**G01C 21/00** (2006.01)

(52) Cooperative Patent Classification (CPC):
**G01C 21/3841; G01C 21/3848; G01C 21/3867**

(54) **MAP PROCESSING METHOD AND APPARATUS**

KARTENVERARBEITUNGSVERFAHREN UND -VORRICHTUNG

PROCÉDÉ ET APPAREIL DE TRAITEMENT DE CARTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.07.2021 CN 202110859013**

(43) Date of publication of application:
**01.02.2023 Bulletin 2023/05**

(73) Proprietor: **Guangzhou Xiaopeng Autopilot Technology Co., Ltd.**
**Guangzhou, Guangdong 510000 (CN)**

(72) Inventors:
• **Huang, Ya**
  **Guangzhou, 510000 (CN)**
• **Liu, Zhongyuan**
  **Guangzhou, 510000 (CN)**
• **Chai, Wennan**
  **Guangzhou, 510000 (CN)**
• **Fan, Yunfeng**
  **Guangzhou, 510000 (CN)**
• **Li, Hongjun**
  **Guangzhou, 510000 (CN)**
• **Jiang, Shaofeng**
  **Guangzhou, 510000 (CN)**
• **Zhou, Jian**
  **Guangzhou, 510000 (CN)**

(74) Representative: **Habermann, Hruschka & Schnabel**
**Patentanwälte**
**Montgelasstraße 2**
**81679 München (DE)**

(56) References cited:
**CN-A- 112 836 003      US-A1- 2016 335 923**
**US-A1- 2021 140 791      US-B1- 6 564 224**

## Description

## TECHNICAL FIELD

The present disclosure relates to the field of vehicle technologies, and more particularly, to a map processing method and apparatus.

## BACKGROUND

Roads of underground parking lots are usually short and complicated. For unfamiliar underground parking lots, drivers are very likely to drive through the same segment of the road during driving.

During driving of a vehicle, a map can be created in real time based on collected data to generate a real-time parking lot map. When the vehicle passes through the same segment of a road along different driving paths, two semantic elements with different IDs for the road may be generated in the map. In addition, in the collected map data, when a loop occurs, there will inevitably be repeated semantic elements, resulting in that the obtained map is not the most simplified map, and it is inconvenient to merge between maps. US6564224B1 discloses a method and apparatus for combining two dissimilar road map databases of a given geographic region, in which A first road map database and a second road map database have different degrees of coverage and different coverage accuracies for a given geographic region. The two road map databases are accessed, and an output road map database representing a combination of the first road map database and the second road map database is generated. US2021140791A1 discloses a systems and method for updating map data, in which based on a plurality of positions, the system can determine a delivery route of a parcel carrier, and, based on the delivery route, the system can generate updated map data. CN112836003A discloses a map processing method and device, which can realize the construction of a universal parking lot map, and can be applied to an indoor or outdoor parking lot. US20160335923A1 discloses an analysis of probe data for the identification of roundabout junctions.

## SUMMARY

In view of the above problems, a map processing method and apparatus are provided to solve or at least partially solve the above problems.

A map processing method is provided. The method includes: obtaining map data collected by a vehicle during driving of the vehicle; determining, when a plurality of semantic elements forming a loop is detected in the map data, a plurality of target semantic elements collected for a same environment object from the plurality of semantic elements forming the loop; and de-duplicating the map data based on the plurality of target semantic elements. The plurality of target semantic elements includes semantic elements for a road node including a first semantic element and a second semantic element that match each other. Said de-duplicating the map data based on the plurality of target semantic elements includes: obtaining a topological relationship among the plurality of semantic elements in the map data; determining, based on the topological relationship, a set of first semantic elements including one or more semantic elements connected to the first semantic element and a set of second semantic elements including one or more semantic elements connected to the second semantic element; and de-duplicating the map data based on the set of first semantic elements and the set of second semantic elements

Optionally, said de-duplicating the map data based on the set of first semantic elements and the set of second semantic elements includes: merging a plurality of semantic elements in the set of first semantic elements and the set of second semantic elements to obtain a set of target semantic elements; updating the one or more semantic elements connected to the first semantic element based on the set of target semantic elements; and replacing the second semantic element associated with the set of second semantic elements with the first semantic element, and deleting the second semantic element.

Optionally, the plurality of target semantic elements includes semantic elements for a road including a third semantic element and a fourth semantic element that match each other. Said de-duplicating the map data based on the plurality of target semantic elements includes: determining, from the map data, a set of third semantic elements including one or more semantic elements that are associated with the third semantic element and a set of fourth semantic elements including one or more semantic elements that are associated with the fourth semantic element; and de-duplicating the map data based on the set of third semantic elements and the set of fourth semantic elements.

Optionally, said de-duplicating the map data based on the set of third semantic elements and the set of fourth semantic elements includes: determining, based on the set of third semantic elements and the set of fourth semantic elements, a set of semantic elements to be deleted and a semantic element to be deleted associated with the set of semantic elements to be deleted; and deleting, from the map data, the set of semantic elements to be deleted and the semantic element to be deleted, to de-duplicate the map data.

Optionally, the set of first semantic elements and/or the set of second semantic elements is a set of semantic elements for a road.

Optionally, the set of third semantic elements and/or the set of fourth semantic elements includes any one or more of a semantic element for a road node, a semantic element for a road sign, a semantic element for a parking space, a semantic element for a lane line, and a semantic element for an obstacle.

A map processing apparatus is provided. The apparatus includes: a map data obtaining module configured to obtain map data collected by a vehicle during driving of the vehicle; a target semantic element determining module configured to determine, when a plurality of semantic elements forming a loop is detected in the map data, a plurality of target semantic elements collected for a same environment object from the plurality of semantic elements forming the loop; and a de-duplication module configured to de-duplicate the map data based on the plurality of target semantic elements. The plurality of target semantic elements comprises semantic elements for a road node comprising a first semantic element and a second semantic element that match each other, and the de-duplication module includes: a topological relationship obtaining sub-module configured to obtain a topological relationship among the plurality of semantic elements in the map data; a set of first semantic elements determining sub-module configured to determine, based on the topological relationship, a set of first semantic elements comprising one or more semantic elements connected to the first semantic element and a set of second semantic elements comprising one or more semantic elements connected to the second semantic element; and a first de-duplication sub-module configured to de-duplicate the map data based on the set of first semantic elements and the set of second semantic elements.

A vehicle is provided. The vehicle includes a processor, a memory, and a computer program stored in the memory and executable on the processor. The computer program, when executed by the processor, implements the map processing method as described above.

A computer-readable storage medium is provided. The computer-readable storage medium stores a computer program. The computer program, when executed by a processor, implements the map processing method as described above.

Embodiments of the present disclosure have the following advantages.

According to the embodiments of the present disclosure, the map data collected during the driving of the vehicle is obtained. When the plurality of semantic elements forming the loop is detected in the map data, the plurality of target semantic elements collected for the same environment object is determined from the plurality of semantic elements forming the loop. The map data is de-duplicated based on the plurality of target semantic elements. Therefore, de-duplication of the map data is realized, and a simplified map is obtained.

**BRIEF DESCRIPTION OF DRAWINGS**

In order to clearly explain technical solutions of the present disclosure, drawings used in the description of the present disclosure are briefly described below. Obviously, the drawings as described below are merely some embodiments of the present disclosure. Based on these drawings, other drawings can be obtained by those skilled in the art without creative effort.

FIG. 1 is a flowchart illustrating steps of a map processing method according to an embodiment of the present disclosure;
FIG. 2a is a flowchart illustrating steps of another map processing method according to an embodiment of the present disclosure;
FIG. 2b is a schematic diagram showing a map according to an embodiment of the present disclosure;
FIG. 2c is a schematic diagram showing another map according to an embodiment of the present disclosure;
FIG. 3a is a flowchart illustrating steps of yet another map processing method according to an embodiment of the present disclosure;
FIG. 3b is a schematic diagram showing yet another map according to an embodiment of the present disclosure; and
FIG. 4 is a block diagram showing a structure of a map processing apparatus according to an embodiment of the present disclosure.

**DESCRIPTION OF EMBODIMENTS**

In order to make the above objects, features and advantages of the present disclosure more obvious and understandable, the present disclosure will be further described in detail below in conjunction with the accompanying drawings and specific embodiments. Obviously, embodiments described here are only part of embodiments of the present disclosure and are not all embodiments of the present disclosure.

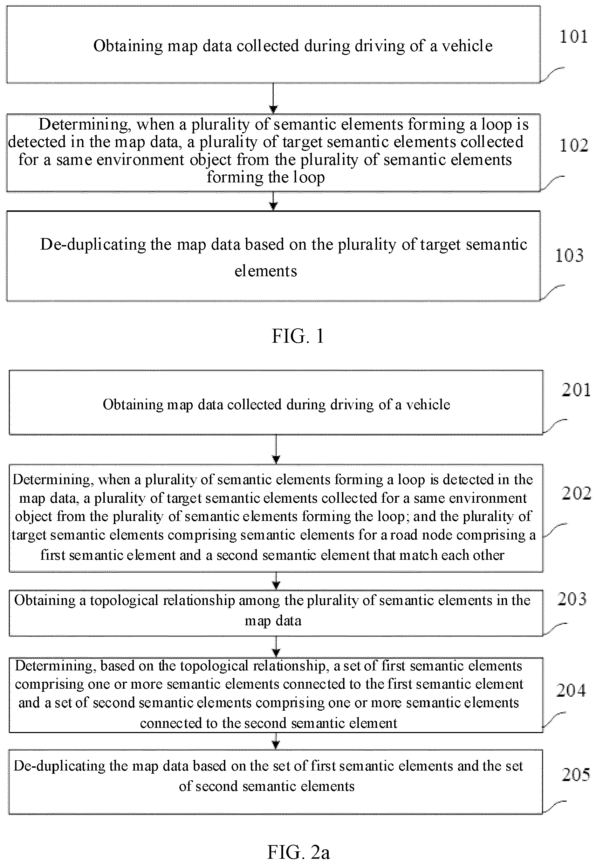

FIG. 1 is a flowchart illustrating steps of a map processing method according to an embodiment of the present disclosure. Referring to FIG. 1, the method can specifically include the following steps.

In step 101, map data collected during driving of a vehicle is obtained.

The vehicle can be provided with various types of sensor devices. The sensor devices is configured to collect data for various environment objects during the driving of the vehicle. Here, the sensor devices can include a lidar device, an ultrasonic radar device, an on-board camera device, and the like. It should be noted that, in the embodiments of the present disclosure, a device for collecting data is not limited to any of the above examples, and may also be other devices that can collect environmental data during the driving of the vehicle.

For example, the lidar device can detect obstacles around the vehicle during the driving of the vehicle. The camera device can take pictures of the surrounding of the vehicle and determine road signs, speed bumps, lane lines, and obstacles in a current environment of the vehicle through feature extraction and feature recognition on the pictures.

The vehicle can create a map in real time by collecting data of environment objects. When the created map needs to be simplified, map data corresponding to the created map can be obtained. The map data can be map data for an underground parking lot.

When driving the vehicle in a parking lot, e.g., in a case of unfamiliarity with the structure of the parking lot or in a process of finding a parking space, a driver may often drive through a same road segment, and thus data will be collected multiple times on the same road segment. When a map is created, there may also be semantic elements for a same environment object. Semantic elements in the created map need to be de-duplicated to obtain a simplified map (for facilitating merging of different maps).

Here, in the map data, semantic elements can be divided into different types of semantic elements based on objects corresponding to the semantic elements in a real environment. Specifically, the semantic elements can be divided into a semantic element for a road, a semantic element for a road node, and a semantic element for a road sign, a semantic element for a parking space, a semantic element for a lane line, a semantic element for an obstacle, and the like.

In step 102, when a plurality of semantic elements forming a loop is detected in the map data, a plurality of target semantic elements collected for a same environment object is determined from the plurality of semantic elements forming the loop.

When a loop occurs in the created map, it can be determined that the map includes repeated semantic elements. Therefore, after the map data is obtained, a loop detection algorithm can be invoked to detect the map data. When the plurality of semantic elements that can form the loop is detected in the map data, the plurality of target semantic elements collected for the same environment object can be determined from the plurality of semantic elements forming the loop. The plurality of target semantic elements includes related semantic elements that match each other.

In step 103, the map data is de-duplicated based on the plurality of target semantic elements.

After the target semantic elements are determined, repeated target semantic elements can be de-duplicated to realize de-duplication on the map data.

Specifically, the repeated target semantic elements can be de-duplicated by merging semantic elements that match each other to generate a new semantic element and replacing the semantic elements in the map that match each other with the new semantic element; or by deleting repeated semantic elements.

In this embodiment of the present disclosure, the map data collected during the driving of the vehicle can be obtained. When the plurality of semantic elements forming the loop is detected in the map data, the plurality of target semantic elements collected for the same environment object can be determined from the plurality of semantic elements forming the loop. The map data can be de-duplicated based on the plurality of target semantic elements. Therefore, the de-duplication of the map data is realized, and a simplified map is obtained.

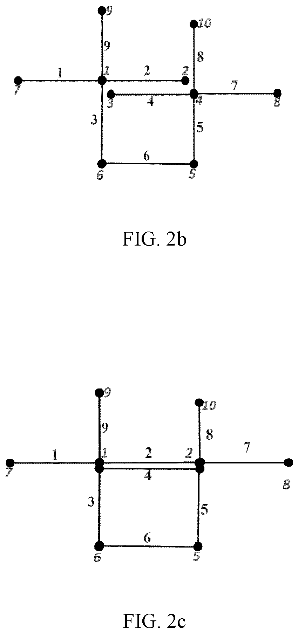

FIG. 2 is a flowchart illustrating steps of another map processing method according to an embodiment of the present disclosure. Referring to FIG. 2, the method may specifically include the following steps.

In step 201, map data collected during driving of a vehicle is obtained.

The vehicle can be provided with various types of sensor devices. The sensor devices is configured to collect data for various environment objects during the driving of the vehicle. Here, the sensor devices can include a lidar device, an ultrasonic radar device, an on-board camera device, and the like. It should be noted that, in the embodiments of the present disclosure, a device for collecting data is not limited to any of the above examples, and may also be other devices that can collect environmental data during the driving of the vehicle.

For example, the lidar device can detect obstacles around the vehicle during the driving of the vehicle. The camera device can take pictures of the surrounding of the vehicle and determine road signs, speed bumps, lane lines, and obstacles in a current environment of the vehicle through feature extraction and feature recognition on the pictures.

The vehicle can create a map in real time by collecting data of environment objects. When the created map needs to be simplified, map data corresponding to the created map can be obtained. The map data can be map data for an underground parking lot.

When driving the vehicle in a parking lot, e.g., in a case of unfamiliarity with the structure of the parking lot or in a process of finding a parking space, a driver may often drive through a same road segment, and thus data will be collected multiple times on the same road segment. When a map is created, there may also be semantic elements for a same environment object. Semantic elements in the created map need to be de-duplicated to obtain a simplified map (for facilitating merging of different maps).

Here, in the map data, semantic elements can be divided into different types of semantic elements based on objects corresponding to the semantic elements in a real environment. Specifically, the semantic elements can be divided into a semantic element for a road, a semantic element for a road node, and a semantic element for a road sign, a semantic element for a parking space, a semantic element for a lane line, a semantic element for an obstacle, and the like.

In step 202, when a plurality of semantic elements forming a loop is detected in the map data, a plurality of target semantic elements collected for a same environment object is determined from the plurality of semantic elements forming the loop; and the plurality of target semantic elements includes semantic elements for a road node including a first semantic element and a second semantic element that match each other.

When a loop occurs in the created map, it can be determined that the map includes repeated semantic elements. Therefore, after the map data is obtained, a loop detection algorithm can be invoked to detect the map data. When the plurality of semantic elements that can form the loop is detected in the map data, the plurality of target semantic elements collected for the same environment object can be determined from the plurality of semantic elements forming the loop. The plurality of target semantic elements includes related semantic elements that match each other.

When the plurality of target semantic elements includes the semantic elements for the road node, the plurality of target semantic elements may include the first semantic element and the second semantic element that match each other.

In a topological map as illustrated in FIG. 2b, semantic elements for roads and semantic elements for road nodes form a loop. Specifically, the semantic elements for roads with IDs 2, 3, 4, 5 and 6 and the semantic elements for road nodes with IDs 1, 2, 3, 4, 5 and 6 form a loop in the map.

After a loop detection is performed, IDs of road nodes and roads that match the loop in the map can be obtained, i.e.,

$$\text{matched\_joint\_id} = \begin{bmatrix} 1 & 2 \\ 3 & 4 \end{bmatrix} \text{ and}$$

$$\text{matched\_link\_id} = \begin{bmatrix} 2 \\ 4 \end{bmatrix}.$$

Here, matched_joint_id represents that road nodes ID1 and ID3 are loop road nodes that match each other and ID2 and ID4 are loop road nodes that match each other, and matched_link_id represents that roads ID2 and ID4 are loop roads that match each other.

In step 203, a topological relationship among the plurality of semantic elements in the map data is obtained.

In the map data, interconnections among the plurality of semantic elements form the topological relationship. Here, the topological relationship can be a relationship between a semantic element for a road node and a semantic element for a road connected to the semantic element for the road node, or a relationship between a semantic element for a road and semantic elements for road nodes at two ends of the road, or a relationship between the semantic element for the road and another semantic element for a road connected to the semantic element for the road.

In step 204, a set of first semantic elements including one or more semantic elements connected to the first semantic element and a set of second semantic elements including one or more semantic elements connected to the second semantic element are determined based on the topological relationship.

In an embodiment of the present disclosure, the set of first semantic elements and/or the set of second semantic elements is a set of semantic elements for a road.

In the map data, due to the topological relationship among the semantic elements, when a certain semantic element is deleted, the integrity of the topological relationship in the map may be compromised. Therefore, after the topological relationship is obtained, the set of first semantic elements including the one or more semantic elements connected to the first semantic element and the set of second semantic elements including the one or more semantic elements connected to the second semantic element may be determined based on the topological relationship. Here, the set of first semantic elements and/or the set of second semantic elements can be the set of semantic elements for the road.

In a map illustrated in FIG. 2b, taking road nodes ID1 and ID3 that match each other as an example, it is assumed that the road node ID1 represents a first semantic element and the road node ID3 represents a second semantic element.

The road node ID1 can be connected to a road ID1, a road ID2, a road ID3, and a road ID9, and thus the set of first semantic elements can include four semantic elements represented by the road ID1, the road ID2, the road ID3, and the road ID9.

The road node ID3 can be connected to a road ID4, and thus the set of second semantic elements can include a semantic element represented by the road ID4.

In step 205, the map data is de-duplicated based on the set of first semantic elements and the set of second semantic elements.

After the set of first semantic elements and the set of second semantic elements are determined, the map data can be de-duplicated based on the set of first semantic elements and the set of second semantic elements, which fully considers the topological relationship in the map data, and effectively ensures connection integrity of the topological relationship after the de-duplication of the map.

In an embodiment of the present disclosure, step 205 may include the following substeps.

In sub-step 21, a plurality of semantic elements in the set of first semantic elements and the set of second semantic elements is merged to obtain a set of target semantic elements.

In practical applications, after the set of first semantic elements and the set of second semantic elements are determined, the set of first semantic elements and the set of second semantic elements may be unified to obtain the set of target semantic elements.

For example, when the obtained set of first semantic elements may include the four semantic elements represented by the road ID1, the road ID2, the road ID3, and the road ID9, and the set of second semantic elements may include the semantic element represented by the road ID4, the obtained set of target semantic elements may include five semantic elements represented by the road ID1, the road ID2, the road ID3, the road ID9, and the road ID4 after unifying the set of first semantic elements and the set of second semantic elements.

In sub-step 22, the one or more semantic elements connected to the first semantic element is updated based on the set of target semantic elements.

After the set of target semantic elements is obtained, the one or more semantic elements connected to the first semantic element can be updated based on the set of target semantic elements. Specifically, an update process may be determining of the plurality of semantic elements included in the set of target semantic elements as semantic elements connected to the first semantic element.

For example, when it is determined that the set of target semantic elements includes five semantic elements represented by the road ID1, the road ID2, the road ID3, the road ID9, and the road ID4, while the first semantic element is connected to the semantic elements represented by the road ID1, the road ID2, the road ID3, and the road ID9, the semantic element represented by the road ID4 can be added to the semantic elements connected to the first semantic element. That is, the topological relationship between the semantic element represented by the road ID4 and the first semantic element is established.

In sub-step 23, the second semantic element associated with the set of second semantic elements is replaced with the first semantic element, and the second semantic element is deleted.

After the semantic elements are updated, the second semantic element associated with the set of second semantic elements can be replaced with the first semantic element, and the second semantic element can be deleted after the replacement is completed. FIG. 2c illustrates a map obtained after road nodes are deleted.

For example, as illustrated in FIG. 2b, the set of second semantic elements may include the semantic element represented by the road ID4, and the semantic element is connected to the second semantic element. A replacement process may be modifying of a topological connection relationship between the semantic element represented by the road ID4 and the second semantic element to a topological connection relationship between the semantic element represented by the road ID4 and the first semantic element.

In the embodiments of the present disclosure, the map data collected during the driving of the vehicle can be obtained. When the plurality of semantic elements forming the loop is detected in the map data, the plurality of target semantic elements collected for the same environment object can be determined from the plurality of semantic elements forming the loop. The plurality of target semantic elements includes the semantic elements for the road node including the first semantic element and the second semantic element that match each other. In turn the topological relationship among the plurality of semantic elements in the map data can be obtained. The set of first semantic elements including the one or more semantic elements connected to the first semantic element and the set of second semantic elements including the one or more semantic elements connected to the second semantic element are determined based on the topological relationship. The map data can be de-duplicated based on the set of first semantic elements and the set of second semantic elements. Therefore, the de-duplication of the map data is realized, and the simplified map is obtained. In addition, the integrity of the topological connection relationship of the map is ensured after the de-duplication.

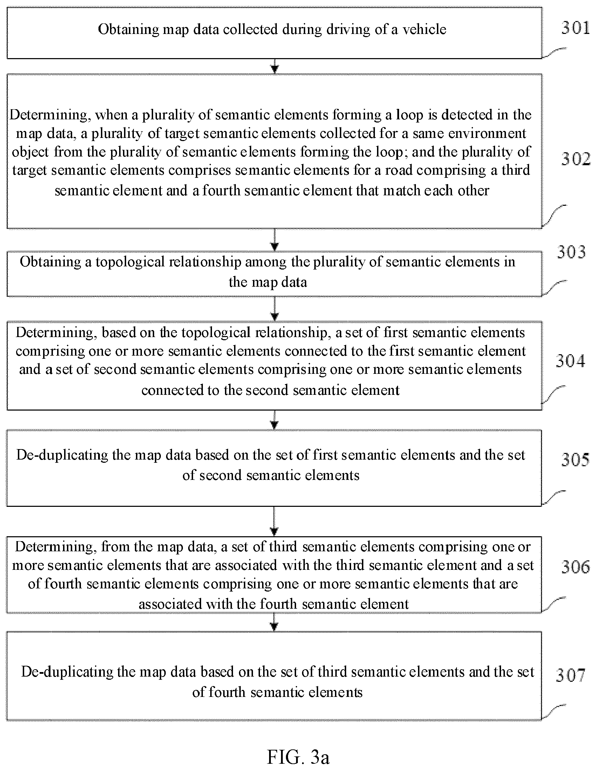

FIG. 3a is a flowchart illustrating steps of yet another map processing method according to an embodiment of the present disclosure. Referring to FIG. 3a, the method may specifically include the following steps.

In step 301, map data collected during driving of a vehicle is obtained.

In step 302, when a plurality of semantic elements forming a loop is detected in the map data, a plurality of target semantic elements collected for a same environment object is determined from the plurality of semantic elements forming the loop; and the plurality of target semantic elements includes semantic elements for a road including a third semantic element and a fourth semantic element that match each other.

In step 303, a topological relationship among the plurality of semantic elements in the map data is obtained.

In step 304, a set of first semantic elements including one or more semantic elements connected to the first semantic element and a set of second semantic elements including one or more semantic elements connected to the second semantic element are determined based on the topological relationship.

In step 305, the map data is de-duplicated based on the set of first semantic elements and the set of second semantic elements.

In step 306, a set of third semantic elements including one or more semantic elements that are associated with the third semantic element and a set of fourth semantic elements including one or more semantic elements that are associated with the fourth semantic element are determined from the map data.

In an embodiment of the present disclosure, the set of third semantic elements and/or the set of fourth semantic elements includes any one or more of a semantic element for a road node, a semantic element for a road sign, a semantic element for a parking space, a semantic element for a lane line, and a semantic element for an obstacle.

During the driving of the vehicle on a certain road, relevant data of environment objects on this road can be collected. These data can be represented by various types of semantic elements in the map data, such as the semantic element for the road node, the semantic element for the road sign, the semantic element for the parking space, the semantic element for the lane line, the semantic element for the obstacle, and the like. These semantic elements are semantic elements associated with semantic elements in a map corresponding to the road.

In step 307, the map data is de-duplicated based on the set of third semantic elements and the set of fourth semantic elements.

After the set of third semantic elements and the set of fourth semantic elements are determined, the map data can be de-duplicated based on the set of third semantic elements and the set of fourth semantic elements, which fully considers an association relationship among the semantic elements in the map data, and effectively ensures integrity of the association relationship among the semantic elements in the map data after the de-duplication of the map data.

Specifically, in an actual de-duplication process, two de-duplication methods can be included.

(1) The map data can be de-duplicated by merging the set of third semantic elements and the set of fourth semantic elements, such that the association relationship among the semantic elements in the map data is more integral.

Semantic elements that match each other in the set of third semantic elements and the set of fourth semantic elements can be merged to generate a new semantic element. Semantic elements that do not match each other in the set of third semantic elements and the set of fourth semantic elements can be unified to generate a new set of semantic elements.

For example, the set of third semantic elements includes a semantic element A1 and a semantic element B, the set of fourth semantic elements includes a semantic element A2 and a semantic element C, and the semantic element A1 and the semantic element A2 are semantic elements collected for the same environment object. In this case, the semantic element A1 and the semantic element A2 can be merged to generate a semantic element A, and the set of third semantic elements and the set of fourth semantic elements are unified to obtain a set of fifth semantic elements. The set of fifth semantic elements may include the semantic element A, the semantic element B, and the semantic element C.

(2) The map data can be de-duplicated by deleting the set of third semantic elements or the set of fourth semantic elements.

In an embodiment of the present disclosure, step 307 may include the following substeps.

In sub-step 31, a set of semantic elements to be deleted and a semantic element to be deleted associated with the set of semantic elements to be deleted are determined based on the set of third semantic elements and the set of fourth semantic elements.

In practical applications, the semantic elements included in the set of third semantic elements and the set of fourth semantic elements can be analyzed to determine integrity of an association relationship among the semantic elements in the set of third semantic elements and the set of fourth semantic elements.

It should be noted that in the embodiments of the present disclosure, the semantic elements can be analyzed based on the number, types, and the like of the semantic elements included in the set of semantic elements. The more the number of the semantic elements is and the richer the types of the semantic elements are, the higher the integrity of the association relationship among the semantic elements has. Those skilled in the art can analyze, based on practical applications, the semantic elements through other methods to determine the integrity of the association relationship among the semantic elements, and the specific analysis method of the semantic elements are not specifically limited here.

A set of semantic elements with low integrity of the association relationship among the semantic elements may be determined as a set of semantic elements to be deleted, and thus each semantic element associated with the set of semantic elements to be deleted can be determined a semantic element to be deleted.

For example, the set of third semantic elements includes one semantic element for a road sign, three semantic elements for an obstacle, and two semantic elements for a speed bump, and the set of fourth semantic elements includes two semantic elements for the obstacle and one semantic element for the speed bump. On a basis of an analysis of the integrity of the association relationship among the semantic elements performed based on the number of semantic elements and the types of semantic elements, it can be determined that the set of third semantic elements has higher integrity of the association relationship among the semantic elements, and thus the set of fourth semantic elements can be determined as the set of semantic elements to be deleted, and each fourth semantic element can be determined as the semantic element to be deleted.

In sub-step 32, the set of semantic elements to be deleted and the semantic element to be deleted are deleted from the map data to de-duplicate the map data.

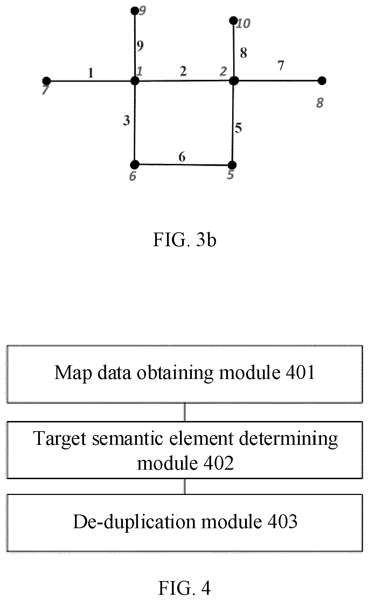

After the set of semantic elements to be deleted and the semantic element to be deleted are determined, the set of semantic elements to be deleted can be deleted before the semantic element to be deleted, so as to ensure the integrity of the association relationship among the semantic elements in the map data after the map data is de-duplicated. A map obtained after the deletions is as illustrated in FIG. 3b.

For example, in practical applications, in order to ensure the uniqueness of an ID of the same road in the map, the following describes a method for deleting the same road from the map. The method may specifically include the following steps.

Step (1): Road nodes associated with the road ID4 in a 2-nd row of roads (i.e., the third semantic element and the fourth semantic element) matched_link_id that match a loop are obtained. The road ID4 included in the road nodes is deleted from the road nodes. Since the loop road ID4 is to be deleted and no longer exists, the road ID4 also needs to be deleted from the association relationship of the road nodes associated with the road ID4.

Step (2): IDs of all road signs included in the road ID4 in the 2-nd row of roads matched_link_id that match the loop are obtained. Road sign information of these IDs is found in the map and deleted from the map. After the loop road ID4 is deleted, the road sign information on this road is deleted accordingly.

Step (3): IDs of all parking spaces included in the road ID4 in the 2-nd row of roads matched_link_id that match the loop are obtained. Parking space information of these IDs is found in the map and deleted from the map. After the loop road ID4 is deleted, the parking space information on this road is deleted accordingly.

Step (4): IDs of all lane lines included in the road ID4 in the 2-nd row of roads matched_link_id that match the loop are obtained. Lane line information of these IDs is found in the map and deleted from the map. After the loop road ID4 is deleted, the lane line information on this road is deleted accordingly.

Step (5): IDs of all obstacles included in the road ID4 in the 2-nd row of roads matched_link_id that match the loop are obtained. Obstacle information of these IDs is found in the map and deleted from the map. After the loop road ID4 is deleted, the obstacle information on this road is deleted accordingly.

Step (6): The entire road ID4 in the 2-nd row of the loop roads matched_link_id is deleted.

Step (7): The loop starting from step (1) is continued, so as to traverse and delete all the loop roads matching matched_link_id.

In the embodiments of the present disclosure, the map data collected during the driving of the vehicle can be obtained. When the plurality of semantic elements forming the loop is detected in the map data, the plurality of target semantic elements collected for the same environment object can be determined from the plurality of semantic elements forming the loop. The plurality of target semantic elements can include the semantic elements for the road including the third semantic element and the fourth semantic element that match each other. The set of third semantic elements including the one or more semantic elements that are associated with the third semantic element and the set of fourth semantic elements including the one or more semantic elements that are associated with the fourth semantic element can be determined from the map data. The map data can be de-duplicated based on the set of third semantic elements and the set of fourth semantic elements. Therefore, the de-duplication of the map data is realized, and the simplified map is obtained. In addition, the integrity of the association relationship between the semantic elements in the map is ensured after the de-duplication.

It should be noted that, in order to simplify description the present disclosure, method embodiments of the present disclosure are expressed as a series of action combinations, but it would be appreciated by those skilled in the art that the embodiments of the present disclosure are not limited to the order of the actions, for the reason that according to embodiments of the present disclosure, some steps may be executed in other orders or be executed at the same time. In addition, it would be further appreciated by those skilled in the art that embodiments described in the specification are preferred embodiments, and actions involved therein may not be necessary for the embodiments of the present disclosure.

FIG. 4 is a block diagram showing a structure of a map processing apparatus according to an embodiment of the present disclosure. Specifically, the apparatus can include a map data obtaining module 401, a target semantic element determining module 402, and a de-duplication module 403.

The map data obtaining module 401 is configured to obtain map data collected during driving of a vehicle.

The target semantic element determining module 402 is configured to determine, when a plurality of semantic elements forming a loop is detected in the map data, a plurality of target semantic elements collected for a same environment object from the plurality of semantic elements forming the loop.

The de-duplication module 403 is configured to de-duplicate the map data based on the plurality of target semantic elements.

In an embodiment of the present disclosure, the plurality of target semantic elements includes semantic elements for a road node including a first semantic element and a second semantic element that match each other. The de-duplication module 403 can include a topological relationship obtaining sub-module, a set of first semantic elements determining sub-module, and a first de-duplication sub-module.

The topological relationship obtaining sub-module is configured to obtain a topological relationship among the plurality of semantic elements in the map data.

The set of first semantic elements determining sub-module is configured to determine, based on the topological relationship, a set of first semantic elements including one or more semantic elements connected to the first semantic element and a set of second semantic elements including one or more semantic elements connected to the second semantic element.

The first de-duplication sub-module is configured to de-duplicate the map data based on the set of first semantic elements and the set of second semantic elements.

In an embodiment of the present disclosure, the first de-duplication sub-module can include a semantic element merging unit, a semantic element update unit, and a replacement and deletion unit.

The semantic element merging unit is configured to merge a plurality of semantic elements in the set of first semantic elements and the set of second semantic elements to obtain a set of target semantic elements.

The semantic element update unit is configured to update the one or more semantic elements connected to the first semantic element based on the set of target semantic elements.

The replacement and deletion unit is configured to replace the second semantic element associated with the set of second semantic elements with the first semantic element, and delete the second semantic element.

In an embodiment of the present disclosure, the plurality of target semantic elements includes semantic elements for a road including a third semantic element and a fourth semantic element that match each other. The de-duplication module 403 can include a set of second semantic elements determining sub-module and a second de-duplication sub-module.

The set of second semantic elements determining sub-module is configured to determine, from the map data, a set of third semantic elements including one or more semantic elements that are associated with the third semantic element and a set of fourth semantic elements including one or more semantic elements that are associated with the fourth semantic element.

The second de-duplication sub-module is configured to de-duplicate the map data based on the set of third semantic elements and the set of fourth semantic elements.

In an embodiment of the present disclosure, the second de-duplication sub-module can include a semantic element to be deleted determining unit and a deletion unit.

The semantic element to be deleted determining unit is configured to determine, based on the set of third semantic elements and the set of fourth semantic elements, a set of semantic elements to be deleted and a semantic element to be deleted associated with the set of semantic elements to be deleted.

The deletion unit is configured to delete, from the map data, the set of semantic elements to be deleted and the semantic element to be deleted, to de-duplicate the map data.

In an embodiment of the present disclosure, the set of first semantic elements and/or the set of second semantic elements is a set of semantic elements for a road.

In an embodiment of the present disclosure, the set of third semantic elements and/or the set of fourth semantic elements includes any one or more of a semantic element for a road node, a semantic element for a road sign, a semantic element for a parking space, a semantic element for a lane line, and a semantic element for an obstacle.

According to the embodiments of the present disclosure, the map data collected during the driving of the vehicle is obtained. When the plurality of semantic elements forming the loop is detected in the map data, the plurality of target semantic elements collected for the same environment object is determined from the plurality of semantic elements forming the loop. The map data is de-duplicated based on the plurality of target semantic elements. Therefore, de-duplication of the map data is realized, and the simplified map is obtained.

In an embodiment of the present disclosure, a vehicle is provided. The vehicle can include a processor, a memory, and a computer program stored on the memory and executable on the processor. The computer program, when executed by the processor, performs steps of the map processing method as described above.

In an embodiment of the present disclosure, a computer-readable storage medium is provided. The computer-readable storage medium stores a computer program. The computer program, when executed by a processor, performs steps of the map processing method as described above.

Since the apparatus embodiments are basically similar to the method embodiments, the description of the apparatus embodiments is relatively simple. For related description, reference may be made to a corresponding part of the description of the method embodiments.

Each embodiment in the specification is described in a progressive manner. Each embodiment focuses on differences from other embodiments. The same or similar parts of various embodiments can be referred to each other.

Those skilled in the art should understand that the embodiments of the present disclosure can be provided as a method, an apparatus, or a computer program product. Therefore, the embodiments of the present disclosure may adopt a form of a complete hardware embodiment, a complete software embodiment, or an embodiment combining software and hardware. In addition, the embodiments of the present disclosure may adopt a form of a computer program product implemented on one or more computer-usable storage media (including but not limited to disk storage, Compact Disc Read-Only Memory (CD-ROM), optical storage, etc.) including computer-usable program codes.

The embodiments of the present disclosure are described with reference to flowcharts and/or block diagrams of the method, the terminal device (system), and the computer program product according to the embodiments of the present disclosure. It should be understood that each process and/or block in the flowcharts and/or block diagrams, and a combination of processes and/or blocks in the flowcharts and/or block diagrams can be realized by computer program instructions. These computer program instructions can be provided to a processor of a general-purpose computer, a special-purpose computer, an embedded processor, or other programmable data processing terminal device to generate a machine, such that instructions executed by the processor of the computer or other programmable data processing terminal devices generate an apparatus for implementing functions specified in one or more processes in the flowchart and/or one or more blocks in the block diagram.

These computer program instructions can also be stored in a computer-readable memory that can guide a computer or other programmable data processing terminal devices to work in a specific manner, such that instructions stored in the computer-readable memory produce an article of manufacture including an instruction device. The instruction device implements functions specified in one or more processes in the flowchart and/or one or more blocks in the block diagram.

These computer program instructions can also be loaded on a computer or other programmable data processing terminal devices to enable a series of operation steps to be executed on the computer or other programmable terminal devices for producing computer-implemented processing, such that instructions executed on the computer or other programmable terminal devices provide steps for implementing functions specified in one or more processes in the flowchart and/or one or more blocks in the block diagram.

Although the preferred embodiments of the embodiments of the present disclosure have been described, those skilled in the art can make additional changes and modifications to these embodiments once they learn the basic creative concept.

Further, It should be noted that relational terms herein, such as "first" and "second", are used only for differentiating one entity or operation from another entity or operation, which, however do not necessarily require or imply that there should be any real relationship or sequence between the entities or operations. Also, terms "comprise", "include" or any other variations thereof are meant to cover non-exclusive including, such that the process, method, article or terminal device including a series of elements do not only include those elements, but also include other elements that are not explicitly listed, or also include inherent elements of the process, method, article or terminal device. In a case that there are no more restrictions, an element qualified by the statement "comprises a ..." does not exclude the presence of additional identical elements in the process, method, article or terminal device that includes the said element.

The above provides detailed description of the provided map processing method and apparatus. Specific examples are used herein to illustrate the principles and implementations of the present disclosure. The description of the above embodiments is only used to facilitate understanding of the method and a core idea thereof of the present disclosure. In summary, the content of the specification should not be construed as a limitation to the present disclosure.

**Claims**

1. A map processing method, comprising:

   obtaining (101; 201; 301) map data collected by a vehicle during driving of the vehicle;
   determining (102), when a plurality of semantic elements forming a loop is detected in the map data, a plurality of target semantic elements collected for a same environment object from the plurality of semantic elements forming the loop; and
   de-duplicating (103) the map data based on the plurality of target semantic elements;
   wherein
   the plurality of target semantic elements comprises semantic elements for a road node comprising a first semantic element and a second semantic element that match each other, and said de-duplicating (103) the map data based on the plurality of target semantic elements comprises:
   obtaining (203; 303) a topological relationship among the plurality of semantic elements in the map data;
   **characterized in that** the method further comprises:

   determining (204; 304), based on the topological relationship, a set of first semantic elements comprising one or more semantic elements connected to the first semantic element and a set of second semantic elements comprising one or more semantic elements connected to the second semantic element; and
   de-duplicating (205; 305) the map data based on the set of first semantic elements and the set of second semantic elements.

2. The method according to claim 1, wherein said de-duplicating (205; 305) the map data based on the set of first semantic elements and the set of second semantic elements comprises:

   merging a plurality of semantic elements in the set of first semantic elements and the set of second semantic elements to obtain a set of target semantic elements;
   updating the one or more semantic elements connected to the first semantic element based on the set of target semantic elements; and
   replacing the second semantic element associated with the set of second semantic elements with the first semantic element, and deleting the second semantic element.

3. The method according to claim 1 or 2, wherein the plurality of target semantic elements comprises semantic elements for a road comprising a third semantic element and a fourth semantic element that match each other, and said de-duplicating (103) the map data based on the plurality of target semantic elements comprises:

determining, from the map data, a set of third semantic elements comprising one or more semantic elements that are associated with the third semantic element and a set of fourth semantic elements comprising one or more semantic elements that are associated with the fourth semantic element; and

de-duplicating the map data based on the set of third semantic elements and the set of fourth semantic elements.

4. The method according to claim 3, wherein said de-duplicating the map data based on the set of third semantic elements and the set of fourth semantic elements comprises:

determining, based on the set of third semantic elements and the set of fourth semantic elements, a set of semantic elements to be deleted and a semantic element to be deleted associated with the set of semantic elements to be deleted; and

deleting, from the map data, the set of semantic elements to be deleted and the semantic element to be deleted, to de-duplicate the map data.

5. The method according to claim 1 or 2, wherein the set of first semantic elements and/or the set of second semantic elements is a set of semantic elements for a road.

6. The method according to claim 3, wherein the set of third semantic elements and/or the set of fourth semantic elements comprises any one or more of:
a semantic element for a road node, a semantic element for a road sign, a semantic element for a parking space, a semantic element for a lane line, and a semantic element for an obstacle.

7. A map processing apparatus, comprising:

a map data obtaining module (401) configured to obtain map data collected by a vehicle during driving of the vehicle;
a target semantic element determining module (402) configured to determine, when a plurality of semantic elements forming a loop is detected in the map data, a plurality of target semantic elements collected for a same environment object from the plurality of semantic elements forming the loop; and
a de-duplication module (403) configured to de-duplicate the map data based on the plurality of target semantic elements;
wherein
the plurality of target semantic elements comprises semantic elements for a road node comprising a first semantic element and a second semantic element that match each other, and the de-duplication module (403) comprises:
a topological relationship obtaining sub-module configured to obtain a topological relationship among the plurality of semantic elements in the map data; **characterized in that** the apparatus further comprises:

a set of first semantic elements determining sub-module configured to determine, based on the topological relationship, a set of first semantic elements comprising one or more semantic elements connected to the first semantic element and a set of second semantic elements comprising one or more semantic elements connected to the second semantic element; and
a first de-duplication sub-module configured to de-duplicate the map data based on the set of first semantic elements and the set of second semantic elements.

8. The apparatus according to claim 7, wherein the first de-duplication sub-module comprises:

a semantic element merging unit configured to merge a plurality of semantic elements in the set of first semantic elements and the set of second semantic elements to obtain a set of target semantic elements;
a semantic element update unit configured to update the one or more semantic elements connected to the first semantic element based on the set of target semantic elements; and
a replacement and deletion unit configured to replace the second semantic element associated with the set of second semantic elements with the first semantic element, and delete the second semantic element.

9. The apparatus according to claim 7 or 8, wherein the plurality of target semantic elements comprises semantic elements for a road comprising a third semantic element and a fourth semantic element that match each other, and the de-duplication module (403) comprises:

a set of second semantic elements determining sub-module configured to determine, from the map data, a set of third semantic elements comprising one or more semantic elements that are associated with the third semantic element and a set of fourth semantic elements comprising one or more semantic elements that are associated with the fourth semantic element; and
a second de-duplication sub-module configured to de-duplicate the map data based on the set of third semantic elements and the set of fourth semantic elements.

10. The apparatus according to claim 9, wherein the second de-duplication sub-module comprises:

a semantic element to be deleted determining unit configured to determine, based on the set of third semantic elements and the set of fourth semantic elements, a set of semantic elements to be deleted and a semantic element to be deleted associated with the set of semantic elements to be deleted; and
a deletion unit configured to delete, from the map data, the set of semantic elements to be deleted and the semantic element to be deleted, to de-duplicate the map data.

11. The apparatus according to claim 7 or 8, wherein the set of first semantic elements and/or the set of second semantic elements is a set of semantic elements for a road.

12. A vehicle, comprising a processor, a memory, and a computer program stored in the memory and executable on the processor, wherein the computer program, when executed by the processor, implements the map processing method according to any one of claims 1 to 6.

13. A computer-readable storage medium having a computer program stored thereon, wherein the computer program, when executed by a processor, implements the map processing method according to any one of claims 1 to 6.

**Patentansprüche**

1. Verfahren zur Kartenverarbeitung, aufweisend:

Erhalten (101; 201; 301) von Kartendaten, die von einem Fahrzeug während des Fahrens des Fahrzeugs gesammelt werden;
Bestimmen (102), wenn eine Vielzahl von semantischen Elementen, die eine Schleife bilden, in den Kartendaten erkannt wird, einer Vielzahl von semantischen Zielelementen, die für ein gleiches Umgebungsobjekt aus der Vielzahl von semantischen Elementen, die die Schleife bilden, gesammelt werden; und
Aufheben des Duplizierens (103) der Kartendaten auf der Grundlage der Vielzahl von semantischen Zielelementen;
wobei die Vielzahl von semantischen Zielelementen semantische Elemente für einen Straßenknoten aufweist, die ein erstes semantisches Element und ein zweites semantisches Element aufweisen, die miteinander übereinstimmen, und das Aufheben des Duplizierens (103) der Kartendaten basierend auf der Vielzahl von semantischen Zielelementen aufweist:
Erhalten (203; 303) einer topologischen Beziehung zwischen der Vielzahl von semantischen Elementen in den Kartendaten; **dadurch gekennzeichnet, dass** das Verfahren des Weiteren aufweist:

Bestimmen (204; 304), basierend auf der topologischen Beziehung, eines Satzes von ersten semantischen Elementen, der ein oder mehrere semantische Elemente aufweist, die mit dem ersten semantischen Element verbunden sind, und eines Satzes von zweiten semantischen Elementen, der ein oder mehrere semantische Elemente aufweist, die mit dem zweiten semantischen Element verbunden sind; und
Aufheben des Duplizierens (205; 305) der Kartendaten auf der Grundlage des Satzes der ersten semantischen Elemente und des Satzes der zweiten semantischen Elemente.

2. Verfahren nach Anspruch 1, bei dem das Aufheben des Duplizierens (205; 305) der Kartendaten auf der Grundlage des Satzes der ersten semantischen Elemente und des Satzes der zweiten semantischen Elemente aufweist:

Zusammenführen einer Vielzahl von semantischen Elementen in dem Satz der ersten semantischen Elemente und dem Satz der zweiten semantischen Elemente, um einen Satz von semantischen Zielelementen zu erhalten;
Aktualisieren des einen oder der mehreren semantischen Elemente, die mit dem ersten semantischen Element verbunden sind, auf der Grundlage des Satzes der semantischen Zielelemente; und
Ersetzen des zweiten semantischen Elements, das mit dem Satz der zweiten semantischen Elemente verbunden ist, durch das erste semantische Element und Löschen des zweiten semantischen Elements.

3. Verfahren nach Anspruch 1 oder 2, bei dem die Vielzahl der semantischen Zielelemente semantische Elemente für eine Straße aufweist, die ein drittes semantisches Element und ein viertes semantisches Element aufweisen, die miteinander übereinstimmen, und das Aufheben des Duplizierens (103) der Kartendaten auf der Grundlage der Vielzahl der semantischen Zielelemente aufweist:

Bestimmen eines Satzes dritter semantischer Elemente aus den Kartendaten, der ein oder mehrere semantische Elemente aufweist, die mit dem dritten semantischen Element verbunden sind, und eines Satzes vierter semantischer Elemente, der ein oder mehrere semantische Elemente aufweist, die mit dem vierten semantischen Element verbunden sind; und

Aufheben des Duplizierens der Kartendaten auf der Grundlage des Satzes der dritten semantischen Elemente und des Satzes der vierten semantischen Elemente.

4. Verfahren nach Anspruch 3, bei dem das Aufheben des Duplizierens der Kartendaten auf der Grundlage des Satzes von dritten semantischen Elementen und des Satzes von vierten semantischen Elementen aufweist:

Bestimmen, basierend auf dem Satz von dritten semantischen Elementen und dem Satz von vierten semantischen Elementen, eines Satzes von zu löschenden semantischen Elementen und eines zu löschenden semantischen Elements, das mit dem Satz von zu löschenden semantischen Elementen verbunden ist; und
Löschen des Satzes der zu löschenden semantischen Elemente und des zu löschenden semantischen Elements aus den Kartendaten, um die Duplizierung der Kartendaten aufzuheben.

5. Verfahren nach Anspruch 1 oder 2, bei dem der Satz der ersten semantischen Elemente und/oder der Satz der zweiten semantischen Elemente ein Satz von semantischen Elementen für eine Straße ist.

6. Verfahren nach Anspruch 3, bei dem der Satz der dritten semantischen Elemente und/oder der Satz der vierten semantischen Elemente eines oder mehrere der folgenden Elemente aufweist:
ein semantisches Element für einen Straßenknoten, ein semantisches Element für ein Straßenschild, ein semantisches Element für einen Parkplatz, ein semantisches Element für eine Fahrbahnlinie und ein semantisches Element für ein Hindernis.

7. Vorrichtung zur Kartenverarbeitung, aufweisend:

ein Kartendaten-Erfassungsmodul (401), das so konfiguriert ist, dass es Kartendaten erhält, die von einem Fahrzeug während des Fahrens des Fahrzeugs erfasst werden;
ein Modul (402) zum Bestimmen von semantischen Zielelementen, das so konfiguriert ist, dass es, wenn eine Vielzahl von semantischen Elementen, die eine Schleife bilden, in den Kartendaten erfasst wird, eine Vielzahl von semantischen Zielelementen bestimmt, die für ein gleiches Umgebungsobjekt aus der Vielzahl von semantischen Elementen, die die Schleife bilden, gesammelt werden; und
ein Deduplizierungsmodul (403), das so konfiguriert ist, dass es die Duplizierung der Kartendaten auf der Grundlage der Vielzahl von semantischen Zielelementen aufhebt;
wobei die Vielzahl von semantischen Zielelementen semantische Elemente für einen Straßenknoten aufweist, die ein erstes semantisches Element und ein zweites semantisches Element aufweisen, die miteinander übereinstimmen, und das Deduplizierungsmodul (403) aufweist:

ein Untermodul zur Gewinnung einer topologischen Beziehung, das so konfiguriert ist, dass es eine topologische Beziehung zwischen der Vielzahl von semantischen Elementen in den Kartendaten gewinnt;
**dadurch gekennzeichnet, dass** die Vorrichtung des Weiteren aufweist:

ein Untermodul zur Bestimmung eines Satzes erster semantischer Elemente, das so konfiguriert ist, dass es auf der Grundlage der topologischen Beziehung einen Satz erster semantischer Elemente bestimmt, der ein oder mehrere semantische Elemente aufweist, die mit dem ersten semantischen Element verbunden sind, und einen Satz zweiter semantischer Elemente, der ein oder mehrere semantische Elemente aufweist, die mit dem zweiten semantischen Element verbunden sind; und
ein erstes Deduplizierungsuntermodul, das so konfiguriert ist, dass es die Duplizierung der Kartendaten auf der Grundlage des Satzes der ersten semantischen Elemente und des Satzes der zweiten semantischen Elemente aufhebt.

8. Vorrichtung nach Anspruch 7, bei der das erste Deduplizierungsuntermodul aufweist:

eine Einheit zum Zusammenführen semantischer Elemente, die so konfiguriert ist, dass sie eine Vielzahl semantischer Elemente in dem Satz erster semantischer Elemente und dem Satz zweiter semantischer Elemente zusammenführt, um einen Satz von semantischen Zielelementen zu erhalten;
eine semantische Elementaktualisierungseinheit, die so konfiguriert ist, dass sie das eine oder die mehreren semantischen Elemente, die mit dem ersten semantischen Element verbunden sind, auf der Grundlage des Satzes der semantischen Zielelemente aktualisiert; und
eine Ersetzungs- und Löscheinheit, die so konfiguriert ist, dass sie das zweite semantische Element, das mit dem Satz der zweiten semantischen Elemente verbunden ist, durch das erste semantische Element ersetzt und das zweite semantische Element löscht.

9. Vorrichtung nach Anspruch 7 oder 8, bei der die Vielzahl der semantischen Zielelemente semantische Elemente für eine Straße aufweist, die ein drittes semantisches Element und ein viertes semantisches Element aufweisen, die miteinander übereinstimmen, und das Deduplizierungsmodul (403) aufweist:

ein Untermodul zur Bestimmung eines Satzes zweiter semantischer Elemente, das so konfiguriert ist, dass es aus den Kartendaten einen Satz dritter semantischer Elemente bestimmt, der ein oder mehrere semantische Elemente aufweist, die mit dem dritten semantischen Element verbunden sind, und einen Satz vierter semantischer Elemente, der ein oder mehrere semantische Elemente aufweist, die mit dem vierten semantischen Element verbunden sind; und
ein zweites Deduplizierungsuntermodul, das so konfiguriert ist, dass es die Duplizierung der Kartendaten auf der Grundlage des Satzes dritter semantischer Elemente und des Satzes vierter semantischer Elemente aufhebt.

10. Vorrichtung nach Anspruch 9, bei der das zweite Deduplizierungsuntermodul aufweist:

eine Bestimmungseinheit für ein zu löschendes semantisches Element, die so konfiguriert ist, dass sie auf der Grundlage des Satzes dritter semantischer Elemente und des Satzes vierter semantischer Elemente einen Satz zu löschender semantischer Elemente und ein zu löschendes semantisches Element bestimmt, das mit dem Satz zu löschender semantischer Elemente verbunden ist; und
eine Löscheinheit, die so konfiguriert ist, dass sie aus den Kartendaten den Satz der zu löschenden semantischen Elemente und das zu löschende semantische Element löscht, um die Duplizierung der Kartendaten aufzuheben.

11. Vorrichtung nach Anspruch 7 oder 8, bei der der Satz der ersten semantischen Elemente und/oder der Satz der zweiten semantischen Elemente ein Satz von semantischen Elementen für eine Straße ist.

12. Fahrzeug mit einem Prozessor, einem Speicher und einem Computerprogramm, das in dem Speicher gespeichert und auf dem Prozessor ausführbar ist, wobei das Computerprogramm, wenn es von dem Prozessor ausgeführt wird, das Verfahren zur Kartenverarbeitung nach einem der Ansprüche 1 bis 6 implementiert.

13. Computerlesbares Speichermedium, auf dem ein Computerprogramm gespeichert ist, wobei das Computerprogramm, wenn es von einem Prozessor ausgeführt wird, das Verfahren zur Kartenverarbeitung nach einem der Ansprüche 1 bis 6 implementiert.

**Revendications**

1. Procédé de traitement de cartes, comprenant :

obtenir (101; 201; 301) des données cartographiques collectées par un véhicule pendant la conduite du véhicule;
déterminer (102), lorsqu'une pluralité d'éléments sémantiques formant une boucle est détectée dans les données cartographiques, une pluralité d'éléments sémantiques cibles collectés pour un même objet d'environnement à partir de la pluralité d'éléments sémantiques formant la boucle; et
annuler la duplication (103) des données cartographiques sur la base de la multiplicité des éléments sémantiques cibles;
dans lequel la pluralité d'éléments sémantiques cibles comprend des éléments sémantiques pour un noeud routier comprenant un premier élément sémantique et un second élément sémantique qui coïncident l'un avec l'autre, et l'annulation de la duplication (103) des données cartographiques sur la base de la pluralité d'éléments sémantiques cibles :

obtenir (203; 303) une relation topologique entre la pluralité d'éléments sémantiques dans les données cartographiques ;
**caractérisé en ce que** le procédé comprend en outre
déterminer (204; 304), sur la base de la relation topologique, un ensemble de premiers éléments sémantiques comprenant un ou plusieurs éléments sémantiques associés au premier élément sémantique et un ensemble de seconds éléments sémantiques comprenant un ou plusieurs éléments sémantiques associés au second élément sémantique; et
annuler la duplication (205; 305) des données cartographiques sur la base de l'ensemble des premiers éléments sémantiques et de l'ensemble des seconds éléments sémantiques.

**2.** Procédé selon la revendication 1, dans lequel l'annulation de la duplication (205; 305) des données cartographiques comprend sur la base de l'ensemble des premiers éléments sémantiques et de l'ensemble des seconds éléments sémantiques:

fusionner une pluralité d'éléments sémantiques dans l'ensemble des premiers éléments sémantiques et l'ensemble des seconds éléments sémantiques pour obtenir un ensemble d'éléments sémantiques cibles;

mettre à jour le ou les éléments sémantiques associés au premier élément sémantique sur la base de l'ensemble des éléments sémantiques cibles; et

remplacer le deuxième élément sémantique associé à l'ensemble des deuxièmes éléments sémantiques par le premier élément sémantique et supprimer le deuxième élément sémantique.

**3.** Procédé selon la revendication 1 ou 2, dans lequel la pluralité d'éléments sémantiques cibles comprend des éléments sémantiques pour une route comprenant un troisième élément sémantique et un quatrième élément sémantique qui correspondent l'un à l'autre, et comprend l'annulation de la duplication (103) des données cartographiques sur la base de la pluralité d'éléments sémantiques cibles:

déterminer un ensemble de troisièmes éléments sémantiques à partir des données cartographiques, comprenant un ou plusieurs éléments sémantiques associés au troisième élément sémantique, et un ensemble de quatrièmes éléments sémantiques comprenant un ou plusieurs éléments sémantiques associés au quatrième élément sémantique; et

annuler la duplication des données cartographiques sur la base de l'ensemble des troisièmes éléments sémantiques et de l'ensemble des quatrièmes éléments sémantiques.

**4.** Procédé selon la revendication 3, dans lequel l'annulation de la duplication des données cartographiques comprend sur la base de l'ensemble de troisièmes éléments sémantiques et de l'ensemble de quatrièmes éléments sémantiques:

déterminer, sur la base de l'ensemble de troisièmes éléments sémantiques et de l'ensemble de quatrièmes éléments sémantiques, un ensemble d'éléments sémantiques à supprimer et un élément sémantique à supprimer qui est associé à l'ensemble d'éléments sémantiques à supprimer; et

supprimer l'ensemble des éléments sémantiques à supprimer et de l'élément sémantique à supprimer des données cartographiques, afin d'annuler la duplication des données cartographiques.

**5.** Procédé selon la revendication 1 ou 2, dans lequel l'ensemble des premiers éléments sémantiques et/ou l'ensemble des seconds éléments sémantiques est un ensemble d'éléments sémantiques pour une route.

**6.** Procédé selon la revendication 3, dans lequel l'ensemble des troisièmes éléments sémantiques et/ou l'ensemble des quatrièmes éléments sémantiques comprend un ou plusieurs des éléments suivants: un élément sémantique pour un noeud routier, un élément sémantique pour un panneau routier, un élément sémantique pour un parking, un élément sémantique pour une ligne de route et un élément sémantique pour un obstacle.

**7.** Appareil de traitement de cartes, comprenant:

un module d'acquisition de données cartographiques (401) configuré pour recevoir des données cartographiques acquises par un véhicule pendant la conduite du véhicule;

un module de détermination d'éléments de cible sémantique (402) configuré pour déterminer, lorsqu'une pluralité d'éléments sémantiques formant une boucle sont capturés dans les données cartographiques, une pluralité d'éléments de cible sémantique collectés pour un même objet d'environnement à partir de la pluralité d'éléments sémantiques formant la boucle; et

un module de déduplication (403) configuré pour annuler la duplication des données cartographiques sur la base de la pluralité d'éléments sémantiques cibles;

dans lequel la pluralité d'éléments sémantiques cibles comprend des éléments sémantiques pour un noeud routier comprenant un premier élément sémantique et un second élément sémantique qui coïncident l'un avec l'autre, et comprend le module de déduplication (403):

un sous-module d'obtention de relation topologique configuré pour obtenir une relation topologique entre la pluralité d'éléments sémantiques dans les données cartographiques ;

**caractérisé en ce que** le dispositif comprend en outre

un sous-module pour déterminer un ensemble de premiers éléments sémantiques, configuré pour déterminer, sur la base de la relation topologique, un ensemble de premiers éléments sémantiques comprenant un ou plusieurs éléments sémantiques associés au premier élément sémantique, et un ensemble de seconds éléments sémantiques comprenant un ou plusieurs éléments sémantiques associés au second élément sémantique; et

un premier sous-module de déduplication configuré pour annuler la duplication des données de carte sur la base de l'ensemble des premiers éléments sémantiques et de l'ensemble des seconds éléments sémantiques.

8. Appareil selon la revendication 7, dans lequel le premier sous-module de déduplication comprend:

une unité de fusion d'éléments sémantiques configurée pour fusionner une pluralité d'éléments sémantiques dans l'ensemble de premiers éléments sémantiques et l'ensemble de seconds éléments sémantiques afin d'obtenir un ensemble d'éléments sémantiques cibles;

une unité de mise à jour d'élément sémantique configurée pour mettre à jour le ou les éléments sémantiques associés au premier élément sémantique sur la base de l'ensemble des éléments sémantiques cibles; et

une unité de remplacement et de suppression configurée pour remplacer le deuxième élément sémantique associé à l'ensemble des deuxièmes éléments sémantiques par le premier élément sémantique et pour supprimer le deuxième élément sémantique.

9. Appareil selon la revendication 7 ou 8, dans lequel la pluralité d'éléments sémantiques cibles comprend des éléments sémantiques pour une route comprenant un troisième élément sémantique et un quatrième élément sémantique qui correspondent l'un à l'autre, et le module de déduplication (403) comprend:

un sous-module pour déterminer un ensemble de deuxièmes éléments sémantiques, configuré pour déterminer, à partir des données cartographiques, un ensemble de troisièmes éléments sémantiques comprenant un ou plusieurs éléments sémantiques associés au troisième élément sémantique, et un ensemble de quatrièmes éléments sémantiques comprenant un ou plusieurs éléments sémantiques associés au quatrième élément sémantique; et

un deuxième sous-module de déduplication configuré pour annuler la duplication des données de carte sur la base de l'ensemble de troisièmes éléments sémantiques et de l'ensemble de quatrièmes éléments sémantiques.

10. Appareil selon la revendication 9, dans lequel le second sous-module de déduplication comprend:

une unité de détermination d'élément sémantique à supprimer configurée pour déterminer, sur la base de l'ensemble de troisièmes éléments sémantiques et de l'ensemble de quatrièmes éléments sémantiques, un ensemble d'éléments sémantiques à supprimer et un élément sémantique à supprimer associé à l'ensemble d'éléments sémantiques à supprimer; et

une unité de suppression configurée pour supprimer des données de carte l'ensemble des éléments sémantiques à supprimer et l'élément sémantique à supprimer, afin d'annuler la duplication des données de carte.

11. Appareil selon la revendication 7 ou 8, dans lequel l'ensemble des premiers éléments sémantiques et/ou l'ensemble des deuxièmes éléments sémantiques est un ensemble d'éléments sémantiques pour une route.

12. Véhicule comprenant un processeur, une mémoire et un programme informatique stocké dans la mémoire et exécutable sur le processeur, le programme informatique, lorsqu'il est exécuté par le processeur, mettant en oeuvre le procédé de traitement de carte selon l'une quelconque des revendications 1 à 6.

13. Support de stockage lisible par ordinateur sur lequel est stocké un programme informatique, ledit programme informatique, lorsqu'il est exécuté par un processeur, mettant en œuvre le procédé de traitement de carte selon l'une quelconque des revendications 1 à 6.

Obtaining map data collected during driving of a vehicle

101

Determining, when a plurality of semantic elements forming a loop is detected in the map data, a plurality of target semantic elements collected for a same environment object from the plurality of semantic elements forming the loop

102

De-duplicating the map data based on the plurality of target semantic elements

103

FIG. 1

Obtaining map data collected during driving of a vehicle

201

Determining, when a plurality of semantic elements forming a loop is detected in the map data, a plurality of target semantic elements collected for a same environment object from the plurality of semantic elements forming the loop; and the plurality of target semantic elements comprising semantic elements for a road node comprising a first semantic element and a second semantic element that match each other

202

Obtaining a topological relationship among the plurality of semantic elements in the map data

203

Determining, based on the topological relationship, a set of first semantic elements comprising one or more semantic elements connected to the first semantic element and a set of second semantic elements comprising one or more semantic elements connected to the second semantic element

204

De-duplicating the map data based on the set of first semantic elements and the set of second semantic elements

205

FIG. 2a

FIG. 2b

FIG. 2c

| Obtaining map data collected during driving of a vehicle | 301 |

| Determining, when a plurality of semantic elements forming a loop is detected in the map data, a plurality of target semantic elements collected for a same environment object from the plurality of semantic elements forming the loop; and the plurality of target semantic elements comprises semantic elements for a road comprising a third semantic element and a fourth semantic element that match each other | 302 |

| Obtaining a topological relationship among the plurality of semantic elements in the map data | 303 |

| Determining, based on the topological relationship, a set of first semantic elements comprising one or more semantic elements connected to the first semantic element and a set of second semantic elements comprising one or more semantic elements connected to the second semantic element | 304 |

| De-duplicating the map data based on the set of first semantic elements and the set of second semantic elements | 305 |

| Determining, from the map data, a set of third semantic elements comprising one or more semantic elements that are associated with the third semantic element and a set of fourth semantic elements comprising one or more semantic elements that are associated with the fourth semantic element | 306 |

| De-duplicating the map data based on the set of third semantic elements and the set of fourth semantic elements | 307 |

FIG. 3a

FIG. 3b

| Map data obtaining module 401 |
|---|

| Target semantic element determining module 402 |
|---|

| De-duplication module 403 |
|---|

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6564224 B1
- US 2021140791 A1
- CN 112836003 A
- US 20160335923 A1